# EUROPEAN PATENT APPLICATION

(11) **EP 2 012 090 A2**
(43) Date of publication of application: **07.01.2009**
(21) Application number: 08153711.0
(22) Date of filing: 31.03.2008
(51) Int. Cl.: G01C 21/36, B60K 35/00, G06F 3/033, H04L 29/06

(54) **On-board integrated multimedia telematic system for information processing and entertainment**

(30) Priority: 03.07.2007 IT TO20070484
(71) Applicant: Magneti Marelli Sistemi Elettronici S.p.A., 20011 Corbetta (Milano) (IT)
(72) Inventor: ROSSO, Giuseppe, 10078 VENARIA (Torino) (IT); TIMOSSI, Gian Maria, 10078 VENARIA (Torino) (IT)
(74) Representative: Deambrogi, Edgardo

(57) **Abstract**

An on-board integrated multimedia telematic system for a vehicle is described, said system comprising an on-board multimedia telematic platform which includes a control unit (10) connected, by means of an on-board communications network operating via a first predetermined transmission protocol, to a plurality of on-board input and output interface devices (20-26), and adapted to be operationally connected, by means of a second predetermined transmission protocol, to an autonomous personal portable electronic device (30) provided with respective input and output interface devices and adapted to display data to a user.

The control unit (10) is arranged to assume a first autonomous operating configuration, where it is adapted to perform resident applications, and a second integrated operating configuration, where it is arranged to convert the signals received in the first transmission protocol from its input interface devices (24, 26) into control signals which can be transmitted in the second transmission protocol to the portable device (30), and convert the display signals received in the second transmission protocol from the portable device (30) into display signals which can be transmitted in the first transmission protocol to its output interface devices (20, 22).

## Description

The present invention relates in general to telematic systems which are integrated on-board vehicles and more specifically to integration of an on-board telematic platform with personal mobile devices, in particular portable satellite navigation devices.

The market of electronic information-processing and telecommunications devices (smart phones, PDAs, portable navigators, digital music readers, to mention a few examples) is becoming increasingly popular among consumers, these devices also being taken on-board vehicles by the owners, who often would like to continue using them, whilst observing safe driving conditions.

Such information-processing and telematic applications are also integrated on-board a vehicle as so-called primary installation systems, namely they are integrated in the vehicle itself at the time of the manufacture thereof, but the personal devices have considerably lower costs and are extremely versatile owing to their portable nature which allows them to be used in the most widely varying circumstances, being able to be "personalized" by the user.

It is known that some types of widely used telematic devices, such as, for example, cellular mobile phones, if equipped with a wireless connection system (such as that using the Bluetooth protocol) may, if a special on-board system is provided, be "contextualised", and therefore be used on-board the vehicle, for example using the voice recognition system for sending commands and the hands-free kit during a conversation.

Personal navigation devices today have significant limitations in terms of functionality and the possibility of user/device interaction with an adequate degree of safety and ergonomics during driving of the vehicle. The device, in fact, may make use solely of its own satellite positioning data, without being able to refine the data using the on-board instruments of the vehicle in the case where no satellite positioning signal is present, and the user must consult and handle the device, being distracted from driving and not having the possibility of using the ergonomic interface devices provided on-board (controls on the steering wheel, displays provided on the dashboard or incorporated in the instrument panel, etc.).

Moreover, in a vehicle provided with a satellite navigation system integrated on-board, the simultaneous presence of an external device performing the same function does not result in any integration, but often in mere duplication of the devices, so that their combined operational potential is not exploited.

The object of the present invention is therefore to provide an on-board integrated multimedia telematic system which avoids the drawbacks of the abovementioned prior art associated with the systems resident on-board the vehicle and the personal systems portable exclusively in an autonomous operating mode. In particular, the object of the invention is to provide an on-board multimedia telematic system adapted to optimise the user interface and the use of on-board multimedia telematic devices and portable navigation devices.

According to the present invention this object is achieved by means of an integrated multimedia telematic system having the characteristic features described in Claim 1.

Particular embodiments form the subject of the dependent claims.

In brief, the present invention is based on the principle of providing an on-board multimedia telematic platform which can be combined with an autonomous portable satellite navigation device so as to form an integrated system with user interface for entering processing commands and displaying navigation data when the portable device is used on-board the vehicle.

The portable navigation device is autonomous, being provided with satellite positioning means and reference road maps and may be used for locating its position and as a navigation aid for the user, independently of association thereof with a vehicle.

This device is arranged to recognise the presence of an on-board telematic platform of a vehicle and to establish with it a wireless connection so as to be able to exchange commands and data following a pairing operation.

According to an improved embodiment, the on-board platform is arranged to assess the functions of the portable device with which it establishes communication and decide whether to operate autonomously or use the applications and the interfaces of the portable device.

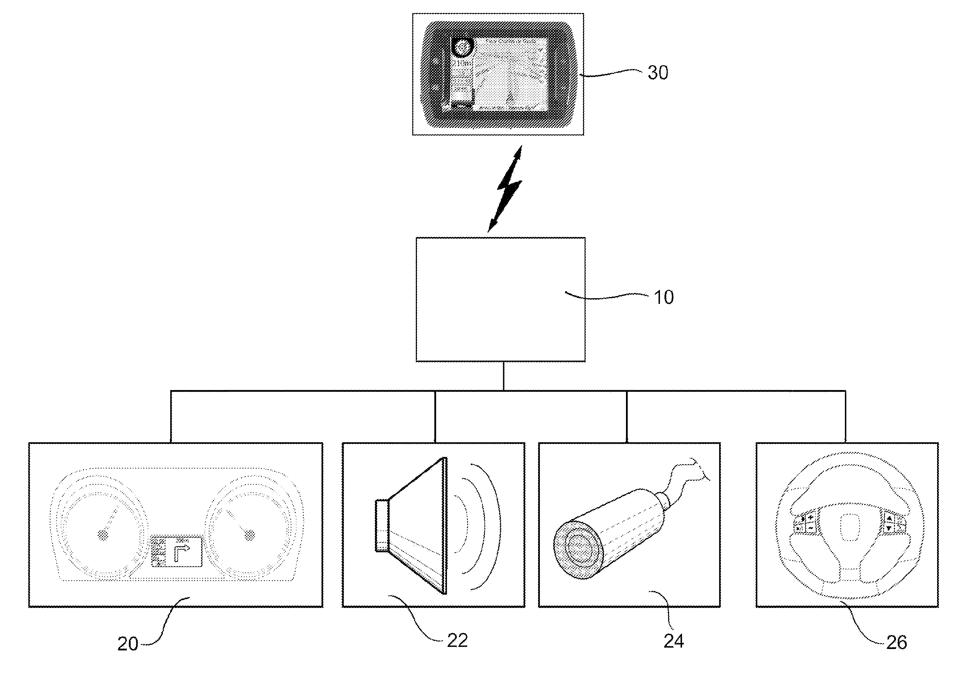

Further characteristic features and advantages of the invention will be described more fully in the detailed description which follows, provided by way of a non-limiting example with reference to the accompanying drawing which shows a block diagram of the system according to the invention.

A control unit of an on-board multimedia telematic platform is indicated by 10. It is interfaced with a CAN (Controller Area Network) or similar on-board cabling system operating with an associated transmission protocol and having, connected thereto, a plurality of on-board user interface devices, i.e. output devices, such as dashboard or instrument panel display device 20 and a sound transmission system 22 comprising a tuner and loudspeakers, and input devices, such as a voice command acquisition unit 24, including at least one microphone and a processing module for recognising said commands, and a set of control buttons 26, such as, for example, the control buttons incorporated on the spokes or central hub of the steering wheel.

In keeping with ergonomic principles, the on-board user interface devices are arranged so that they can be easily viewed and accessed by the driver, so as to allow easy operation/reading by the driver, while keeping control of the vehicle.

Reference numeral 30 denotes a personal mobile device, such as a portable navigation device, including - in accordance with the known art - a satellite positioning module (for example a GPS receiver), a memory module with a data base of reference road maps stored therein, a processing module for calculating navigation (route) data and input/output user interface modules, for example a keyboard terminal, a display and the like.

The portable navigation device 30 is adapted to perform autonomously the navigation functions, in particular calculate navigation data (instructions as to the route to follow), starting from the current position of the device determined by means of its satellite positioning module, to a destination preselected on the basis of the abovementioned reference maps.

The navigation data can then be supplied to the user in the form of navigation instructions represented, for example, in visual form on the display or imparted in sound form by means of a speech synthesizer.

The portable navigation device 30 and the control unit 10 include respective communications modules for establishing a data transmission connection between them in wireless mode, preferably using a common protocol such as Bluetooth, Wi-Fi, ZigBee or RFID.

The portable navigation device 30 is also provided with means for recognising the presence of an on-board multimedia telematic platform within a predetermined communication operating radius (for example approximately equivalent to the dimensions of the vehicle itself or its passenger compartment) and is arranged to establish automatically communication with the abovementioned platform in the event of presence being confirmed ("pairing").

The control unit 10 is arranged to convert the control signals received from the input interface devices 24, 26 via a first transmission protocol into control signals which can be transmitted to the portable navigation device 30 via the common transmission protocol, and to convert the display signals received from the portable navigation device 30 via the common transmission protocol into display signals which can be transmitted to the output interface devices 20, 22 via said first transmission protocol.

A procedure for initialising the system envisages that the on-board telematic platform is made visible to other devices adopting a predetermined common wireless communications protocol, for example by means of the user operating the control buttons 26 or giving voice instructions acquired by the microphone 24.

When it is switched on, the portable navigation device 30 starts an initialisation procedure and subsequently performs - by means of the recognition means - a search to detect the presence of devices using said common wireless communications protocol within a predetermined exploratory distance, which corresponds substantially to the range of a wireless message sent by the portable device.

The on-board telematic platform may be selected by the user from among a plurality of recognised devices via a selection menu and then the device 30 is able to perform a pairing operation, preferably after entering an identification PIN for ensuring security and privacy or restricted access.

The data exchanged during the pairing operation may be stored in the individual devices and used for subsequent automatic connections without the aid of the user as soon as the personal device 30 recognises, by means of a polling procedure, the on-board platform, i.e. when it is situated within a predetermined operating range for communication therewith.

In a preferred embodiment, where the data base containing the reference road maps and the processing module for calculating the navigation data are present exclusively on the portable navigation device 30, the user may advantageously access its navigation functions directly via the user interface of the portable device 30 or via a shared input interface of the on-board telematic platform, or via the control buttons on the steering wheel 26 or the voice command acquisition unit 24.

Similarly, the user may advantageously receive information from the portable device 30 directly via the audio and video user interface of the device or via a shared output interface of the on-board telematic platform, or via the dashboard or instrument panel display device 20 or the sound system 22.

Advantageously an integrated system is obtained where it is possible to access the navigation functions of the portable device using the on-board ergonomic user interfaces so that it is not necessary to arrange the portable device within the reach and viewing range of the vehicle driver, but instead it could also remain inside its casing or the housing in which is placed for transportation (bag, suitcase, pocket, etc.).

A further advantage consists in the fact that in this way it is possible to use a single map and single navigation engine.

Yet another advantage consists in that, by displaying the navigation information on the display device 20 of the dashboard or instrument panel, the display of the portable device 30 may be used for other purposes, for example in order to display auxiliary images, such as the images received from recording means mounted on the vehicle, for example for aiding the parking manoeuvres.

In this case, the control unit 10 of the on-board platform is arranged to acquire image data from the recording devices by means of a Wi-Fi radio connection and direct this data and navigation information so that it is displayed on the display of the portable device 30 or on the display device 20 of the dashboard or the on-board instrument panel depending on the size of the data and the display screens, if necessary performing synthetic processing of the data intended for the smaller-size screen.

This configuration offers the possibility of showing on portable devices, which can be generally connected to the on-board platform by means of the Bluetooth protocol, image data which, due to its very nature, is supplied at a distance from the recording devices by means of different transmission protocols, for example Wi-Fi, with a greater range (e.g. the rear recording cameras on-board lorries, articulated vehicles or long vehicles, which must transmit the recorded image data to an on-board control unit situated in the vicinity of the driving cab), or in any case more suitable for the exchange of a large quantity of data, which otherwise would not be supported by the Bluetooth protocol.

Conveniently, the control unit 10 may also be associated with an on-board detection unit adapted to acquire from an on-board communications network, and if necessary process, signals emitted by movement sensors of the vehicle such as, for example, vehicle speed sensors, gyroscopes, accelerometers, odometers, which indicate the progression of the vehicle's movement.

The portable navigation device is therefore adapted to assume a first autonomous operating configuration, where the navigation data can be calculated solely on the basis of the positioning signal of the device received via satellite, and a second assisted operating configuration, where the navigation data can be calculated (in addition or exclusively) with the aid of the movement data of the vehicle acquired via the on-board sensors. This assisted operating configuration may take the place of satellite navigation, for example in conditions where the satellite positioning data is not received (travel through a tunnel or temporary loss of signal in general), or in combination therewith for refinement of the positioning data acquired via satellite, in particular for the purposes of greater congruence with the reference maps available in the data base of the navigation device.

In this latter case, the wireless connection between on-board platform and portable device can be used not only for the exchange of commands and response data, but also conveniently for the transmission of "pure" positioning data and "map matching" data from the portable device 30 to the on-board platform, as well as navigation data corrected by means of a "dead reckoning" method from the on-board platform to the portable device 30.

In an improved embodiment, the on-board platform is arranged to assess the functions of the portable device with which it establishes communication and decide whether to operate autonomously or use the applications and the interfaces of the portable device.

In the case where a same navigation engine is present on-board the telematic platform of the vehicle and the portable device, the control unit 10 is arranged to select an integrated operating mode, where the on-board telematic platform uses the navigation engine of the portable device, or an autonomous operating mode, where the on-board telematic platform uses the local navigation engine.

Obviously, without modifying the principle of the invention, the embodiments and the constructional details may be widely varied with respect to that described and illustrated purely by way of a non-limiting example, without thereby departing from the scope of protection of the present invention defined by the accompanying claims.

## Claims

1. On-board integrated multimedia telematic system for a vehicle, **characterized in that** it comprises an on-board multimedia telematic platform which includes a control unit (10) connected, by means of an on-board communications network operating via a first predetermined transmission protocol, to a plurality of on-board input and output interface devices (20-26), and adapted to be operationally connected, by means of a second predetermined transmission protocol, to an autonomous personal portable electronic device (30) provided with respective input and output interface devices and adapted to display data to a user;
in which the abovementioned control unit (10) is arranged to assume a first autonomous operating configuration, where it is adapted to perform resident applications, and a second integrated operating configuration, where it is adapted to establish communication of recognition signals in response to presence interrogation signals emitted by said portable device (30) during pairing, and perform applications resident on the portable device (30);
the recognition data exchanged during pairing being stored on the on-board platform and the portable device (30) for automatically executing subsequent connections, and
in which - in the paired configuration - the control unit (10) of the on-board telematic platform is arranged to convert the signals received in the first transmission protocol from its input interface devices (24, 26) into control signals which can be transmitted in the second transmission protocol to the portable device (30), and convert the display signals received in the second transmission protocol from the portable device (30) into display signals which can be transmitted in the first transmission protocol to its output interface devices (20, 22).

2. System according to Claim 1, in which said portable device (30) is a satellite navigation device provided with satellite positioning means and containing at least one geographic reference map, adapted to calculate data for navigation from a detected tracking position of the device to a predetermined destination in said at least one reference map.

3. System according to Claim 2, in which the control unit (10) of the on-board telematic platform is arranged to assess the available functions of the portable device (30) with which it establishes communication and select an autonomous operating mode, where it is adapted to perform resident applications, or an integrated operating mode, where it is adapted to perform applications resident on the portable device (30) so as to form an integrated system with user interface for entering processing commands and displaying navigation data when the portable device (30) is used on-board the vehicle.

4. System according to any one of the preceding claims, in which said control unit (10) is interfaced with an on-board CAN, having, connected thereto, output interface devices, including a dashboard or instrument panel display device (20) and a sound system (22), and input interface devices, including a voice command acquisition unit (24) and a set of control buttons (26).

5. System according to any one of the preceding claims, in which said control unit (10) is arranged to acquire image data from means for recording the environment surrounding the vehicle, installed on-board the vehicle and directing this data so that it is displayed on a display device of the portable device (30) or on the on-board display device (20) depending on the size of the data and display devices.

6. System according to Claim 5, in which said image data is auxiliary image data processed for display on a smaller size display device.

7. System according to Claim 3, in which said control unit (10) is adapted to acquire signals emitted by vehicle movement sensors indicating the progress of the vehicle's movement, the portable navigation device (30) being adapted to assume a first autonomous operating configuration, where the navigation data can be calculated solely on the basis of the device positioning signal, and a second associated operating configuration, where the navigation data can be calculated with the aid of movement data of the vehicle.
